Europäisches Patentamt

European Patent Office

Office européen des brevets

(19)

(11) Veröffentlichungsnummer: **0 231 446**
**B1**

(12) **EUROPÄISCHE PATENTSCHRIFT**

(45) Veröffentlichungstag der Patentschrift:
**26.04.89**

(51) Int. Cl.⁴: **F16L 11/11**, F16L 37/02

(21) Anmeldenummer: 86115550.5

(22) Anmeldetag: **10.11.86**

(54) Kunststoff-Wellrohr mit angeformter Steck-Muffe.

(30) Priorität: **05.02.86 DE 3603481**

(43) Veröffentlichungstag der Anmeldung:
**12.08.87 Patentblatt 87/33**

(45) Bekanntmachung des Hinweises auf die Patenterteilung:
**26.04.89 Patentblatt 89/17**

(84) Benannte Vertragsstaaten:
**AT DE FR GB IT NL SE**

(56) Entgegenhaltungen:
**EP-A- 0 135 634**
**CH-A- 474 710**
**DE-B- 2 703 440**
**GB-A- 2 108 623**

(73) Patentinhaber: **Hegler, Wilhelm, Goethestrasse 2,
D-8730 Bad Kissingen(DE)**

(72) Erfinder: **Hegler, Wilhelm, Goethestrasse 2, D-8730 Bad
Kissingen(DE)**
Erfinder: **Hegler, Ralph-Peter, Goethestrasse 2,
D-8730 Bad Kissingen(DE)**

(74) Vertreter: **Rau, Manfred, Dr. Dipl.-Ing. et ai, Rau &
Schneck, Patentanwälte Königstrasse 2,
D-8500 Nürnberg 1(DE)**

## Beschreibung

Die Erfindung betrifft ein Kunststoff-Wellrohr nach dem Oberbegriff des Anspruches 1.

Der Aufbau solcher Kunststoff-Wellrohre, und zwar insbesondere von Doppelwandrohren mit durchgehend glatter Innenwand, und die zu ihrer Herstellung erforderlichen Vorrichtungen sind allgemein bekannt (siehe DE-A 1 704 718 entsprechend US-A 3 677 676, DE-B 2 403 618 entsprechend US-A 3 994 646, US-A 3 280 430).

Aus der EP-A 0 135 634 (entsprechend US-A 4 500 284) ist es bereits bekannt, bei einem derartigen Kunststoff-Wellrohr Steck-Muffen einstückig anzuformen. Von solchen Rohren geht die Erfindung aus. Das Grundproblem bei der Verlegung solcher Rohre liegt in der relativ großen Toleranzbreite bezüglich des Außen-Durchmessers der Kreisringe. Dies hat zur Folge, daß eine Verlegung, d.h. ein Einführen eines Rohrendes in eine Steck-Muffe, gar nicht oder nur unter großem Montageaufwand möglich ist, während in einem anderen Fall kein ausreichend fester Sitz des Rohrendes in der Steck-Muffe gewährleistet ist.

Der Erfindung liegt daher die Aufgabe zugrunde, Kunststoff-Wellrohre der gattungsgemäßen Art so auszugestalten, daß auch bei relativ großen Toleranzen der Durchmesser, und zwar insbesondere der Außen-Durchmesser der Rohre, eine einfache Verlegung durch Einschieben des Rohrendes in eine Steck-Muffe bei gleichzeitig dichter Muffenverbindung erreicht wird.

Diese Aufgabe wird erfindungsgemäß durch die Merkmale im Kennzeichnungsteil des Anspruches 1 gelöst. Das Wesen der Erfindung besteht darin, daß jeweils lediglich die auf dem Außenwand-Abschnitt eines Kreisrings ausgebildete ringförmige Erhöhung zur Anlage an der Innenwand einer Steck-Muffe kommt, wobei durch das Übermaß des Außen-Durchmessers der Erhöhung gegenüber dem Innen-Durchmesser der Steck-Muffe sichergestellt ist, daß jede ringförmige Erhöhung auch tatsächlich an der Innenwand der Steck-Muffe dichtend anliegt. Durch die erfindungsgemäße Ausgestaltung des jeweiligen Kreisrings wird andererseits ermöglicht, daß der gesamte Kreisring radial elastisch nach innen verformt wird, wenn der Außen-Durchmesser der ringförmigen Erhöhung größer ist als der Innen-Durchmesser der Steck-Muffe. Zum einen kann der Wandabschnitt radial nach innen eingedrückt werden, zum anderen werden aber auch die Seitenwand-Abschnitte des Kreisrings in den elastischen Verformungsvorgang miteinbezogen. Da eine Anlage nur zwischen den ringförmigen Erhöhungen und der Innenwand der Steck-Muffe erreicht wird, ist ein einfaches Einschieben bei der Verlegung bzw. Herausziehen bei der Demontage möglich. Wenn eine Verklebung zwischen dem Wellrohr und der Steck-Muffe erfolgen soll, ist durch die erfindungsgemäßen Maßnahmen gleichzeitig sichergestellt, daß beiderseits einer ringförmigen Erhöhung zwischen der Innenwand der Steck-Muffe und dem Wandabschnitt des Kreisrings zwei Spalte verbleiben, in denen sich Klebstoff befindet, der beim Einschieben des Rohrendes in die Steck-Muffe nicht herausgequetscht wird. Die erfindungsgemäßen Maßnahmen sind mit besonderem Vorteil bei den oben erwähnten Doppelwand-Rohren einsetzbar, bei denen die Kreisringe wegen des einstückig mit ihnen verbundenen, glatten Innenrohres radial in sich völlig starr sind, während durch die erfindungsgemäßen Maßnahmen diese Kreisringe elastisch verformbar gemacht werden. Die erfindungsgemäßen Maßnahmen sind aber auch bei Kunststoff-Wellrohren vorteilhaft anwendbar, die kein Innenrohr aufweisen, wie sie beispielsweise aus der DE-C 1 203 940 bekannt sind.

Durch die Maßnahmen nach Anspruch 2 wird sichergestellt, daß der Außen-Durchmesser der Kreisringe ohne die ringförmigen Erhöhungen kleiner ist als der Innen-Durchmesser der Steck-Muffe, so daß das zu vermeidende Klemmen zwischen Rohrende und Steck-Muffe sicher vermieden wird.

Durch Anspruch 3 wird sichergestellt, daß der jeweilige Kreisring nicht im Bereich der ringförmigen Erhöhung verstärkt wird, wodurch die erfindungsgemäß herbeigeführten Effekte wieder beeinträchtigt würden.

Die Maßnahmen nach Anspruch 4 stellen sicher, daß das Toleranzfeld bezüglich des Außen-Durchmessers tatsächlich auch durch eine entsprechende radiale Erstreckung der ringförmigen Erhöhung abgedeckt wird.

Die Maßnahmen nach den Ansprüchen 5 und 6 stellen sicher, daß eine ausreichende radiale Elastizität im Bereich der ringförmigen Erhöhungen vorhanden ist.

Die Maßnahmen nach Anspruch 7 erleichtern das Einschieben eines Rohrendes in eine Steck-Muffe, die in bekannter Weise im Bereich ihres freien Endes einen sich konisch erweiternden Einführ-Abschnitt aufweist.

Aus der DE-C 1 255 292 ist es bekannt, bei glattwandigen, starren Kunststoffrohren mit einstückig angeformten Steck-Muffen am Außenumfang ringförmige Wülste vorzusehen, in deren Bereich die Rohre bzw. auch die Muffen verstärkt sind, da die Innenwand des Rohres bzw. der Muffe in Längsrichtung glatt ist. Ursache dieser Wülste sind in den Herstellungswerkzeugen angebrachte, ringförmige Ausnehmungen, in die an Vakuum angeschlossene Schlitze einmünden. Diese umlaufenden Wülste dienen dazu, die Ringsteifigkeit der Rohre zu erhöhen und diesen bei der Verlegung unter Putz einen zusätzlichen Halt zu geben und deren Längsausdehnung zu verhindern. Gleichzeitig können diese Wülste innerhalb der Muffenverbindung abdichtend wirken. Bei praktischen Ausführungen war die axiale Erstreckung dieser Wülste etwa 0,4 mm, während ihre radiale Erstreckung kleiner 0,1 mm war. Diese bekannten Rohre mit Wülsten konnten keine Anregung im Hinblick auf die Erfindung geben.

Weitere Vorteile und Merkmale der Erfindung ergeben sich aus der Beschreibung eines Ausführungsbeispiels anhand der Zeichnung. Es zeigt

Fig. 1 eine Muffenverbindung zweier Rohre, teilweise im Längsschnitt und

Fig. 2 einen stark vergrößerten, unterbrochenen Teilschnitt aus Fig. 1.

2

Bei den in der Zeichnung dargestellten, miteinander verbundenen Rohr-Abschnitten 1, 2 handelt es sich um sogenannte Doppelwand-Rohre. Sie bestehen jeweils aus einem durchgehend zylindrischen Innenrohr 3 und einem gewellten Außenrohr 4. Die Herstellung dieser Rohre erfolgt in aus der DE-A 1 704 718 (entsprechend US-A 3 677 676) bekannter Weise, wobei die Verbindung zwischen Innenrohr 3 und Außenrohr 4 erfolgt, wenn die später Innenrohr 3 und Außenrohr 4 bildenden warmplastischen Schläuche aus Kunststoff hinter dem Spritzkopf des Extruders zusammengeführt werden. Im Bereich zwischen zwei benachbarten Kreisringen 5 des Außenrohres 4, also im Bereich eines Wellentales 6 sind Innenrohr 3 und Außenrohr 4 einstückig. An dem einen Rohr-Abschnitt 1 ist eine Steck-Muffe 7 angeformt, in der bei der Herstellung die das Innenrohr 3 und das Außenrohr 4 bildenden warmplastischen Schläuche zusammengeführt worden sind.

Jeder Kreisring 5 hat – wie aus der Zeichnung hervorgeht – den Querschnitt eines sich nach außen leicht verjüngenden Trapezes, wobei dieser Trapez-Querschnitt außen durch einen ringzylindrischen Außenwand-Abschnitt 8 und seitlich durch zwei Seitenwand-Abschnitte 9, 10 begrenzt wird, die – bezogen auf die Mittel-Längs-Achse 11 der Rohr-Abschnitte 1, 2 radial nach außen aufeinander zu geneigt sind. Die Basis des Trapez wird durch das jeweilige Innenrohr 3 gebildet.

Der Außenwand-Abschnitt 8 ist jeweils mit einer ringförmig umlaufenden, flachen Erhöhung (12) versehen die aus dem Außenwand-Abschnitt 8 ausgeformt ist, also etwa die gleiche Dicke a wie der Außenwand-Abschnitt 8 und die Seitenwand-Abschnitte 9, 10 aufweist. Die Erstreckung der Erhöhung 12 in Richtung der Achse 11 beträgt l. Die Erstreckung des Kreisrings 5 in Richtung der Achse 11 ist L. Dieses Maß L ist geringer als die Teilung T des jeweiligen Rohr-Abschnittes 1 bzw. 2 durch die Kreisringe 5, die also jeweils von Mitte Wellental 6 bis Mitte Wellental 6 läuft. Der Außen-Durchmesser der Rohr-Abschnitte im Bereich der ringförmigen Erhöhungen 12 bei unverformtem Kreisring 5 ist D. Der Innen-Durchmesser der Steck-Muffe 7 ist mit d bezeichnet. Die Steck-Muffe 7 weist im Bereich ihres offenen Endes einen sich konisch erweiternden Einführabschnitt 13 auf, dessen Innen-Durchmesser d' im Bereich des freien Endes 14 geringfügig größer ist als der Außen-Durchmesser D der Erhöhungen 12. Für die radiale Erstreckung h der ringförmigen Erhöhungen 12 bezogen auf den Außen-Durchmesser D der jeweiligen Rohr-Abschnitte 1, 2 gilt $0,002 \, D \leq h \leq 0,004 \, D$.

Für die axiale Erstreckung l der ringförmigen Erhöhungen 12 bezogen auf die axiale Erstreckung L der Kreisringe 5 gilt $0,10 \, L \leq l \leq 0,35 \, L$.

Für die axiale Erstreckung l der ringförmigen Erhöhungen 12 bezogen auf die Dicke a der äußeren Wandabschnitte 4 gilt $3 \, a \leq l \leq 5 \, a$.

Schließlich gilt für den Außen-Durchmesser D der ringförmigen Erhöhungen 12 in unverformtem Zustand der Kreisringe 5 bezogen auf den Innendurchmesser d der Steck-Muffe 7

$(D - 2h) \leq d$,

wobei h die radiale Erstreckung der ringförmigen Erhöhung 12 über dem äußeren Wandabschnitt 8 ist. Für ein gängiges Rohr mit der Nennweite 100 gelten hierbei folgende Zahlenwerte:

$D \approx 110 \, mm$
$d \approx 110 \, mm$
$T \approx 12 \, mm$
$l \approx 2,0 \, mm$
$h \approx 0,3 \, mm$
$a \approx 0,5$–$0,6 \, mm$
$L \approx 10 \, mm$

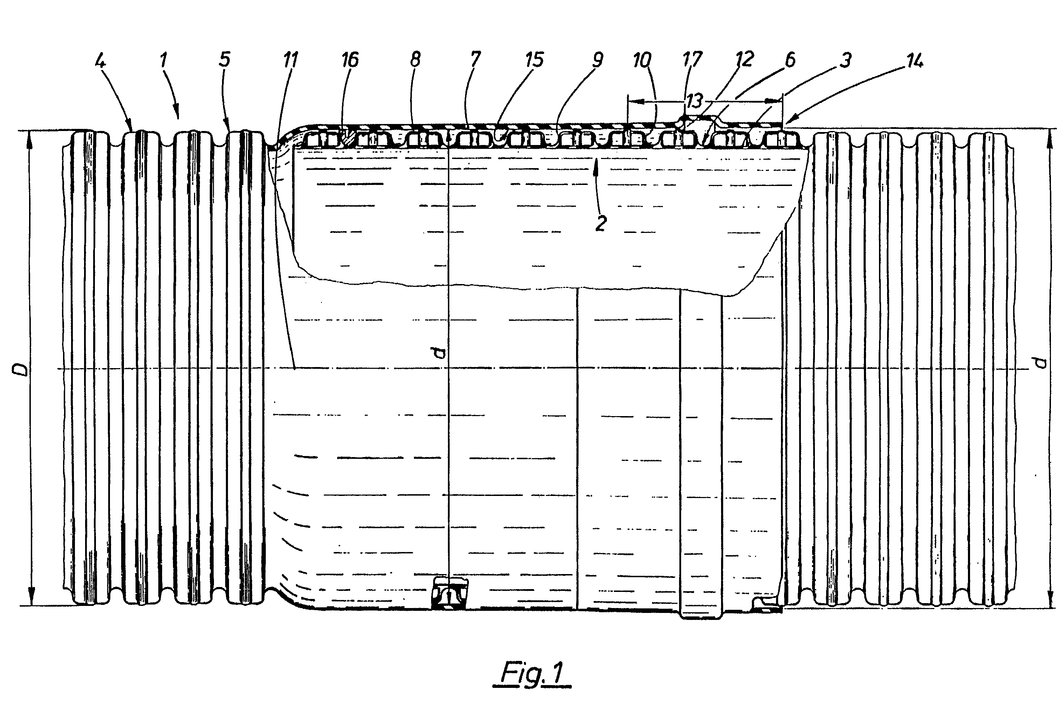

Wie aus Fig. 1 ersichtlich ist, kann zwischen zwei benachbarte Kreisringe 5 ein Dichtungsring 16 eingelegt werden, der einerseits im Wellental 6 und andererseits gegen die Innenfläche 15 der Steck-Muffe 7 abdichtend anliegt. Hierdurch kann eine zusätzliche Abdichtwirkung in bekannter Weise erzielt werden.

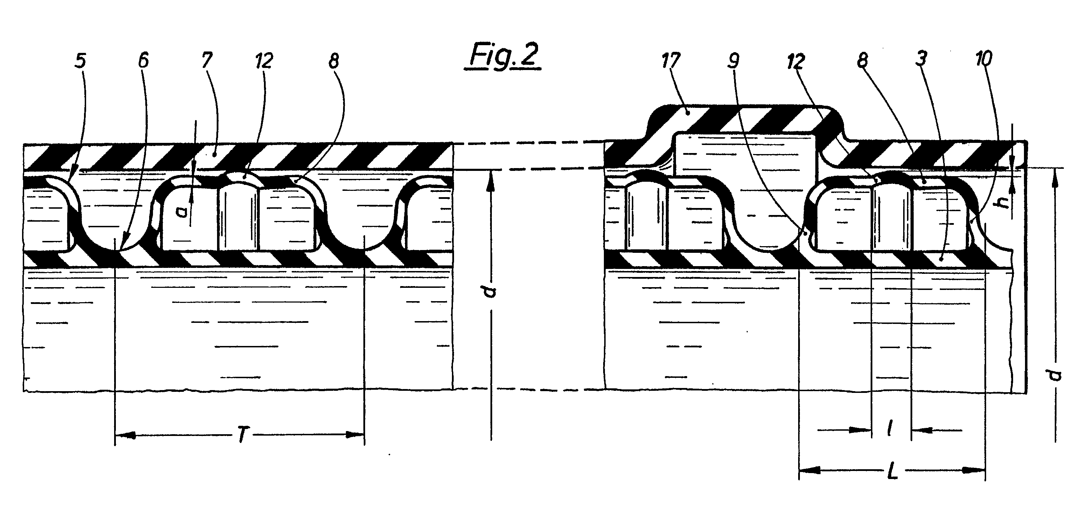

Wie sich insbesondere aus Fig. 2, links, ergibt, sind die Kreisringe 5 in dem in die Steck-Muffe 7 eingeschobenen Bereich des Rohrabschnittes 2 in der Weise verformt, daß der Außenwand-Abschnitt 8, aus dem die ringförmige Erhöhung 12 ausgeformt ist, radial nach innen durchgebogen ist, wodurch wiederum die ringförmige Erhöhung 12 elastisch gegen die Innenfläche 15 der Steckmuffe gedrückt ist. Dagegen ist in Fig. 2, rechts, der Kreisring 5 in unverformtem Zustand erkennbar.

Die Steck-Muffe 7 weist im Bereich ihres Einführabschnittes 13 eine die Ringsteifigkeit verstärkende Außendicke 17 auf. Als Material für die Rohre wird beispielsweise PVC (Polyvinylchlorid) eingesetzt.

**Patentansprüche**

1. Kunststoff-Wellrohr, insbesondere Doppelwandrohr, dessen Außenwand (Außenrohr 4) eine Kreisring-Wellung aufweist, und das an einem Ende mit einer einstückig angeformten Steck-Muffe (7) mit annähernd zylindrischer Innenfläche versehen ist, deren Innen-Durchmesser (d) im wesentlichen dem Außen-Durchmesser (D) des Wellrohres entspricht, wobei die die Wellung bildenden, in Rohr-Längsrichtung im Abstand (T) zueinander angeordneten Kreisringe (5) jeweils etwa den Querschnitt eines sich nach außen verjüngenden Trapezes und hierzu einen etwa ringzylindrischen Außenwand-Abschnitt (8) und sich hieran anschließende, leicht geneigte Seitenwand-Abschnitte (9, 10) aufweisen, dadurch gekennzeichnet, daß mindestens ein Teil der Außenwand-Abschnitte (8) der Kreisringe (5) mit einer gemeinsam mit dem jeweiligen Außenwand-Abschnitt (8) radial nach innen elastisch verformbaren, ringförmigen Erhöhung (12) versehen ist, deren Außen-Durchmesser (D) in unverformtem Zustand geringfügig größer ist als der Innen-Durchmesser (d) der Steck-Muffe (7).

2. Wellrohr nach Anspruch 1, dadurch gekennzeichnet, daß für den Außen-Durchmesser (D) der ringförmigen Erhöhung (12) in unverformtem Zustand des Kreisrings (5) bezogen auf den Innen-Durchmesser (d) der Steck-Muffe (7) gilt

$(D - 2h) \leq d$,

wobei h die radiale Erstreckung der ringförmigen Erhöhung (12) ist.

3. Wellrohr nach Anspruch 1, dadurch gekennzeichnet, daß die ringförmigen Erhöhungen (12) etwa gleiche oder geringfügig geringere Dicke (a) aufweisen als die Außenwand-Abschnitte (8).

4. Wellrohr nach Anspruch 1, dadurch gekennzeichnet, daß für die radiale Erstreckung (h) der ringförmigen Erhöhungen (12) bezogen auf den Außen-Durchmesser (D) des Rohres gilt
0,002 D ≤ h ≤ 0,004 D.

5. Wellrohr nach Anspruch 1, dadurch gekennzeichnet, daß für die axiale Erstreckung (l) der ringförmigen Erhöhungen (12) bezogen auf die axiale Erstreckung (L) der Kreisringe (5) gilt
0,10 L ≤ l ≤ 0,35 L.

6. Wellrohr nach Anspruch 1, dadurch gekennzeichnet, daß für die axiale Erstreckung (l) der ringförmigen Erhöhungen (12) bezogen auf die Dicke (a) der Außenwand-Abschnitte (8) gilt
3 a ≤ l ≤ 5 a.

7. Wellrohr nach Anspruch 1, wobei die Steck-Muffe (7) im Bereich ihres freien Endes (14) einen sich konisch erweiternden Einführ-Abschnitt (13) aufweist, dadurch gekennzeichnet, daß der Außen-Durchmesser (D) der ringförmigen Erhöhungen (12) geringfügig kleiner ist als der Innen-Durchmesser (d') der Steck-Muffe (7) am freien Ende (14) des Einführ-Abschnittes (13).

## Claims

1. A plastic corrugated tube, in particular a double-walled tube, the outer wall (outer tube 4) of which has a circular ring corrugation, and which on one end has an integrally-molded sleeve coupler (7) with an approximately cylindrical inner face, the inside diameter (d) of which is approximately equal to the outside diameter (D) of said corrugated tube, wherein the circular rings (5) forming the corrugation of said tube and being spaced apart from one another in the longitudinal direction of the tube at the distance (T) each have the cross-section of a trapezoid tapering toward the outside, and to this effect an approximately annular-cylindrical outer wall section (8) and slightly inclined side wall sections (9, 10) adjoining the outer wall section, characterized in that at least some of the outer wall sections (8) of the circular rings (5) are provided with an annular elevation (12) which is radially inwardly elastically deformable in common with the respective outer wall section (8), the outside diameter (D) of said elevation, in the undeformed state, being slightly greater than the inside diameter (d) of said sleeve coupler (7).

2. A corrugated tube according to claim 1, characterized in that the relationship (D – 2h) ≤ d applies, for the outside diameter (d) of the annular elevation (12) in the undeformed state of the circular ring (5), with respect to the inside diameter (d) of the sleeve coupler (7), where h is the radial extension of the annular elevation (12).

3. A corrugated tube according to claim 1, characterized in that the annular elevations (12) have approximately the same or a slightly lesser thickness (a) than said outside wall sections (8).

4. A corrugated tube according to claim 1, characterized in that, for the radial extension (h) of the annular elevations (12), with respect to the outside diameter (D) of the tube, the following relationship applies:
0.002 D ≤ h ≤ 0.004 D.

5. A corrugated tube according to claim 1, characterized in that, for the axial extension (l) of the annular elevations (12), with respect to the axial extension (L) of the circular rings (5), the following relationship applies:
0.10 L ≤ l ≤ 0.35 L.

6. A corrugated tube according to claim 1, characterized in that, for the axial extension (l) of the annular elevations (12), with respect to the thickness (a) of the outer wall sections (8), the following relationship applies:
3a ≤ l ≤ 5a.

7. A corrugated tube according to claim 1, wherein the sleeve coupler (7) has in the vicinity of its free end (14) an introduction portion (13) widening conically, characterized in that the outside diameter (D) of the annular elevations (12) is slightly smaller than the inside diameter (d') of said sleeve coupler (7) at the free end (14) of the introduction portion (13).

## Revendications

1. Tuyau ondulé en matière plastique, notamment tuyau à double paroi, dont la paroi extérieure (tube extérieur 4) présente une ondulation formant des couronnes, ce tuyau étant muni à une extrémité d'un manchon d'emboîtement (7) incorporé par moulage qui présente une surface intérieure sensiblement cylindrique dont le diamètre intérieur (d) correspond sensiblement au diamètre extérieur (D) du tuyau ondulé, les couronnes (5) qui forment l'ondulation et qui sont disposées à distance (T) l'une de l'autre dans la direction longitudinale du tuyau présentant chacune une section en forme de trapèze allant en se rétrécissant vers l'extérieur et pour cela, une partie de paroi extérieure (8) annulaire sensiblement cylindrique et, s'y raccordant, des parties de parois latérales (9, 10) légèrement inclinées, caractérisé en ce qu'au moins une fraction de la partie de paroi extérieure (8) des couronnes (5) est munie d'une saillie annulaire (12) déformable élastiquement en direction radiale vers l'intérieur conjointement avec la partie de paroi extérieure (8), le diamètre extérieur (D) de cette saillie étant, à l'état non déformé, légèrement supérieur au diamètre intérieur (d) du manchon d'emboîtement (7).

2. Tuyau ondulé selon la revendication 1, caractérisé en ce que pour le diamètre extérieur (D) de la saillie annulaire (12), à l'état non déformé de la couronne (5), rapporté au diamètre intérieur (d) du manchon d'emboîtement (7), on a:
(D – 2h) ≤ d,
h étant la cote radiale de la saillie annulaire (12).

3. Tuyau ondulé selon la revendication 1, caractérisé en ce que les saillies annulaires (12) ont une épaisseur (a) sensiblement égale ou légèrement inférieure à celle des parties de paroi extérieure (8).

4. Tuyau ondulé selon la revendication 1, caractérisé en ce que pour la cote radiale (h) des saillies annulaires (12), rapportée au diamètre extérieur (D) du tuyau, on a:

0,002 D ≤ h ≤ 0,004 D.

5. Tuyau ondulé suivant la revendication 1, caractérisé en ce que pour la cote axiale (l) des saillies annulaires (12), rapportée à la cote axiale (L) des couronnes (5), on a:

0,10 L ≤ l ≤ 0,25 L.

6. Tuyau ondulé selon la revendication 1, caractérisé en ce que pour la cote axiale (l) des saillies annulaires (12), rapportée à l'épaisseur (a) des parties de paroi extérieure (8), on a:

3 a ≤ l ≤ 5 a.

7. Tuyau ondulé selon la revendication 1, le manchon d'emboîtement (7) présentant dans la zone de son extrémité libre (14) une partie d'introduction (13) allant en s'élargissant en forme de cône, caractérisé en ce que le diamètre extérieur (D) des saillies annulaires (12) est légèrement inférieur au diamètre intérieur (d') du manchon d'emboîtement (7) à l'extrémité libre (14) de la partie d'introduction (13).

_Fig.1_

EP 0 231 446 B1

## Fig. 2